# EUROPÄISCHE PATENTSCHRIFT

(11) **EP 1 452 250 B1**
(45) Veröffentlichungstag und Bekanntmachung des Hinweises auf die Patenterteilung: **12.11.2008**
(21) Anmeldenummer: 04003227.8
(22) Anmeldetag: 13.02.2004
(51) Int. Cl.: B21K 1/18, F02F 3/00

(54) **Herstellungsverfahren für einen Kühlkanalkolben mit umformbarem Bund**
Method of manufacturing a cooling duct piston with deformable flange
Méthode de fabrication d'un piston à canal de refroidissement avec collet déformable

(30) Priorität: 01.03.2003 DE 10309016
(43) Veröffentlichungstag der Anmeldung: 01.09.2004
(73) Patentinhaber: KS Kolbenschmidt GmbH, 74172 Neckarsulm (DE)
(72) Erfinder: Mielke, Siegfried, Dr., 74172 Neckarsulm (DE)
(74) Vertreter: Thul, Hermann

(56) Entgegenhaltungen:
- CH-A- 230 566
- DE-B- 1 210 302
- DE-C1- 3 502 248
- DE-C1- 3 713 191

## Beschreibung

Die Erfindung betrifft ein Verfahren zur Herstellung eines Kühlkanalkolbens gemäß den Merkmalen des Oberbegriffes des Patentanspruches 1.

Grundsätzlich ist es bekannt, Rohlinge für Kolben, die nach ihrer Endbearbeitung unter anderem einen Kühlkanal aufweisen, im Guß- oder Schmiedeverfahren herzustellen. Hierbei sind auch Kombinationen der beiden genannten Verfahren denkbar. Das Schmiedeverfahren bietet sich an, da ein im Schmiedeverfahren hergestellter Kolben bessere Festigkeitseigenschaften aufweist gegenüber einem Kolben, der im Gießverfahren hergestellt wurde. Bei Kolbenrohlingen, die im Schmiedeverfahren hergestellt werden, bedarf es eines aufwendigen Prozesses, um einen im Ringfeldbereich liegenden Kühlkanal in diesen Kolbenrohling einzubringen. Gegenüber gegossenen Kolbenrohlingen kann bei im Schmiedeverfahren hergestellten Rohlingen nicht mit verlorenen Kernen gearbeitet werden. Deshalb ist es immer wieder problematisch, den Kühlkanal durch geeignete Schritte einzubringen. Bekannt hierfür ist, dass radial umlaufend eine Ausnehmung durch spanabhebende Bearbeitung eingebracht und durch geeignete Mittel verschlossen wird. Dabei ist aber auf die Maßhaltigkeit der Ausnehmung und der Mittel, die diese Ausnehmung verschließen sollen, zu achten, wodurch ein kostenintensiver Arbeitsschritt zusätzlich erforderlich wird. Durch die erforderliche Maßhaltigkeit sind auch die beteiligten Elemente nur entsprechend aufwendig zu fertigen.

Aus der DE 35 02 248 C1 ist ein Verfahren zur Herstellung eines einteiligen Kolbens für einen Verbrennungsmotor durch Schmieden bekannt. Hierbei wird ein Kolbenrohling mit Vorformlingkragen hergestellt, wobei dieser Kragen im oberen Bereich des Kolbenbodens durch Umformen abgewinkelt wird, wodurch eine sogenannte Kolbenkronenschulter entsteht, die zusammen mit einem Bereich eines Kolbenkronenvorformlings einen Wärmedrosselringspalt erzeugt. Aufgrund der Umformung des Kragens im oberen Bereich des Kolbenbodens entstehen zunächst abgerundete Kanten, die eine Überarbeitung der seitlichen und oberen Flächen des Kolbenrohlings bedingen. Ein wesentlicher Nachteil ist zusätzlich durch die Umformung gegeben, wodurch der Kolbenboden in seiner Festigkeit geschwächt wird, so dass ein derart hergestellter Kolben den Anforderungen an moderne Brennkraftmaschinen in Bezug auf die gesteigerten Zünddrücke und Verbrennungstemperaturen zur Einhaltung vorgegebener Abgasvorschriften nicht mehr genügt.

Die gattungsbildende DE-B-1 103 698 zeigt einen Kühlkanalkolben, der einen Kühlkanal etwa im Bereich hinter einem Ringfeld aufweist, wobei ein Kolbenrohling zumindest teilweise in einem Schmiedeverfahren geformt wird. In den Figuren der DE-B-1 103 698 ist ein einziger umlaufend geformter Bund mit einer dahinter liegenden Ausnehmung vorhanden, wobei dieser vorhandene Bund derart umgeformt wird, dass die Ausnehmung zur Bildung des Kühlkanales von diesem einen Bund verschlossen wird.

Der Erfindung liegt daher die Aufgabe zugrunde, ein alternatives Verfahren zur Herstellung eines Kühlkanalkolbens gegenüber den bekannten Verfahren anzugeben ist.

Diese Aufgabe ist durch die Merkmale des Patentanspruches 1 gelöst.

Erfindungsgemäß ist vorgesehen, dass der Kolbenrohling sowohl einen oberen umlaufenden Bund als auch beabstandet dazu einen unteren umlaufenden Bund aufweist, die durch Schmieden hergestellt werden, wobei in dem Bereich der einander zugewandten Flächen der beiden Bunde in den Kolbenrohling eine radial umlaufende Ausnehmung eingebracht und dann sowohl der obere Bund als auch der untere Bund in Richtung der Ausnehmung umgeformt wird, so dass diese verschlossen und der Kühlkanal gebildet wird.

Das heißt, dass der Schmiederohling des Kolbens mit den umlaufenden Bunden im Bereich des Feuersteges in etwa auf der Höhe der ersten Nut des Ringfeldes hergestellt wird, wodurch sich Vorteile im Hinblick auf die Festigkeit des Kolbens ergeben und diese umlaufenden Bunde im weiteren Verlauf der Bearbeitung Bestandteil der Abdeckung einer einzubringenden Ausnehmung ist. Denn nach dem Herstellen der umlaufenden Bunde wird die Ausnehmung mit ihrem oberen und unteren Scheitelradius und der Innenwand in den Kolbenrohling eingearbeitet und die somit hergestellte umlaufende, von dem Kolbenrohling abstehenden Fahnen in eine Form gebracht, mit der sie nachdem Umformen die Abdeckung zur Bildung des Kühlkanales verschließt. Durch eine geeignete Umformung, bei der es sich beispielsweise um Schmieden, Rundhämmern, Treiben durch eine Hohlform oder Walzdrücken handeln kann, wird die umlaufende Fahne in Richtung der Kolbenachse umgeformt und verschließt somit die Ausnehmung, wobei der Verschluß derart erfolgt, dass ein Hohlraum, der den späteren Kühlkanal bildet, verbleibt.

Verfahrensschritte zur Herstellung eines Kühlkanalkolbens sind im folgenden erläutert und anhand der Figuren beschrieben.

Es zeigen:
Figur 1: Herstellen eines umlaufenden oberen Bundes,
Figur 2: Einbringen einer Ausnehmung und Bearbeitung des oberen Bundes und
Figur 3: Anlegen des oberen Bundes an den Kolbenrohling,
Figur 4: Herstellen eines umlaufenden unteren Bundes,
Figur 5: Einbringen einer Ausnehmung und Bearbeitung des unteren Bundes,
Figur 6: Anlegen des unteren Bundes an den Kolbenrohling,
Figur 7: Kolbenrohling zur Verwendung in dem erfindungsgemäßen Verfahren mit einem oberen und einem unteren Bund.

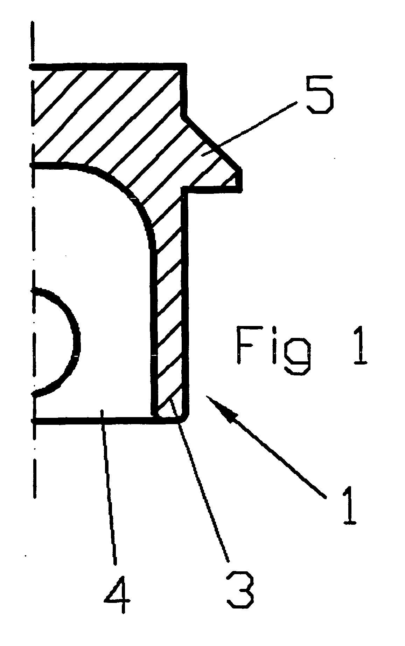

Figur 1 zeigt in vereinfachter Darstellung einen Ausschnitt aus einem Kolbenrohling 1, der zumindest teilweise in einem Schmiedeverfahren hergestellt wird. Dieser Kolbenrohling 1 weist einen Kolbenboden 2 auf, unterhalb dessen in an sich bekannter Weise Kolbenschäfte 3 und Kolbennaben 4 angeordnet sind. Im Bereich des Feuersteges, der beim fertigen Kolben vorhanden ist, wird in etwa auf der Höhe der ersten Nut ein umlaufender Bund im Schmiedeverfahren hergestellt. Die geometrische Form des Bundes 5 wird dabei so gewählt, dass ausreichend Material zur Verfügung steht, um die (in Figur 1 noch nicht gezeigte) Ausnehmung, die den späteren Kühlkanal bildet, zu verschließen.

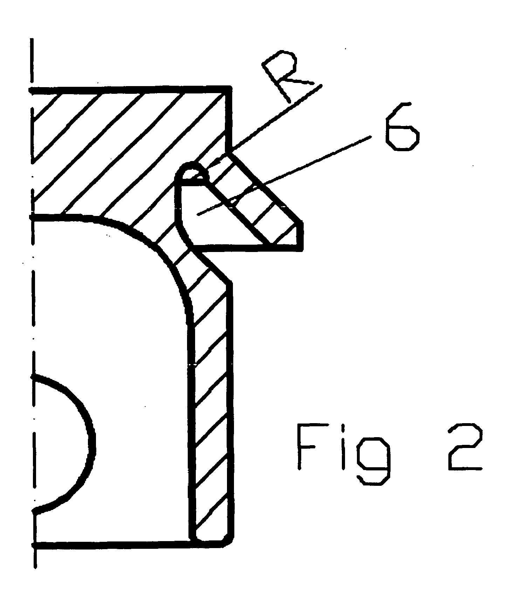

Figur 2 zeigt, dass insbesondere durch spanabhebende Bearbeitung eine Ausnehmung 6 mit ihrem oberen und unteren Scheitelradius und der Innenwand in den Kolbenrohling 1 eingearbeitet und der Bund 5 in eine Form gebracht wird, die geeignet ist, die Ausnehmung 6 nach Umformung des bearbeitenden Bundes 5 zu verschließen.

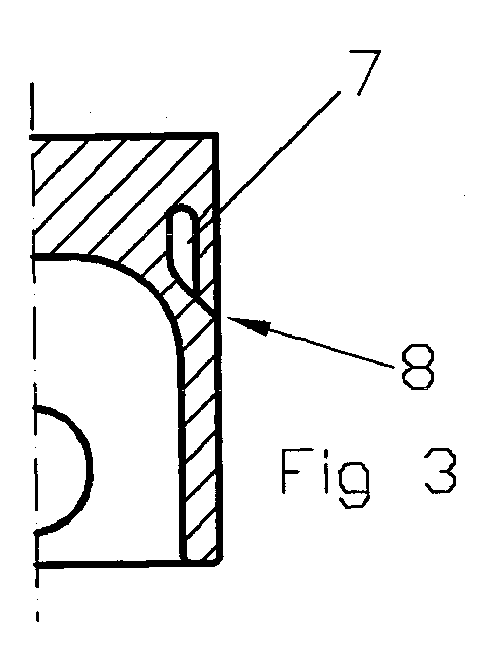

Figur 3 zeigt den Verschluß der Ausnehmung 6 durch Umformung des bearbeitenden Bundes 5. Zur Umformung des bearbeitenden Bundes 5 bietet es sich an, das Walzdrücken einzusetzen, da hierdurch ein einfaches Umformen bei gleichzeitig sehr guten Festigkeitseigenschaften erzielt wird. Dabei hat es sich bewährt, den Bereich, der durch das Walzdrücken umgeformt werden soll, auf die nötige Umformtemperatur zu bringen. Diese erforderliche Umformtemperatur ist abhängig von den geometrischen Eigenschaften im Umformbereich sowie abhängig von dem Material, aus dem der Kolbenrohling 1 besteht. Nach dem Umformen des überarbeiteten Bundes 5 verschließt dieser die Ausnehmung 6, so dass der radial umlaufende Kühlkanal 7 entsteht. In einem Anlagebereich 8 kommt das umlaufende Ende des bearbeiteten Bundes 5 zur Anlage an den Kolbenrohling 1, wobei in diesem Anlagebereich 8 die beteiligten Anlageflächen unlösbar miteinander verbunden werden oder Dichtelemente eingesetzt werden können, um den Kühlkanal 7 öldicht zu machen. Anschließend kann noch eine Überarbeitung, insbesondere eine spanabhebende Bearbeitung, des Anlagabereiches 8 erfolgen. Ein weiterer Vorteil des umgeformten Bundes 5 ist, dass dieser die ausreichende Festigkeit aufweist, um dort ein Ringfeld 9 vorzusehen.

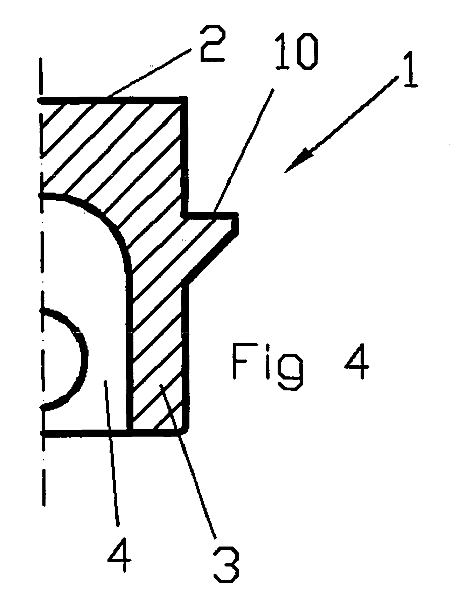

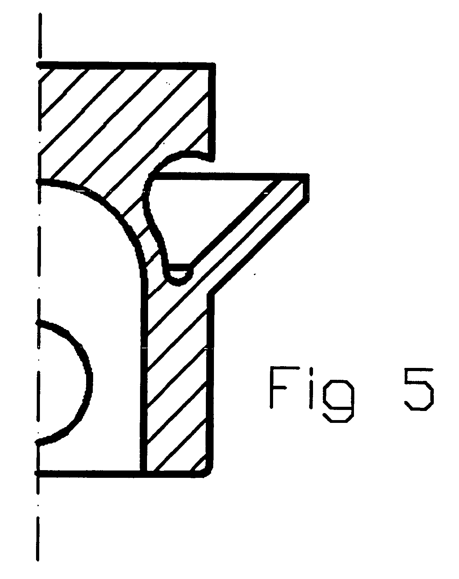

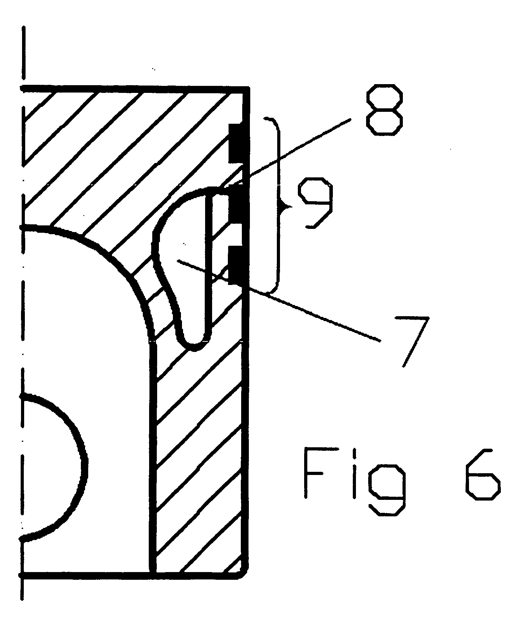

Analog zu den geometrischen Ausgestaltungen und den Verfahrensschritten, die zu den Figuren 1 bis 3 beschrieben worden sind, zeigen die Figuren 4 bis 6 analoge Konstruktionen und Verfahrensschritte, insbesondere mit dem Unterschied, dass unterhalb des Kolbenbodens 2 ein unterer umlaufender Bund beim Kolbenrohling 1 angeformt wird. Dieser untere umlaufende Bund 10 befindet sich beispielsweise in etwa auf Höhe des Scheitelpunktes der Kolbennabe 4, wobei er aber auch oberhalb oder darunter angeordnet sein kann. Auch dieser untere Bund 10 wird durch Schmieden des Kolbenrohling 1 hergestellt (Figur 4), wobei danach wieder eine Ausnehmung in den Kolbenrohling 1 eingebracht wird (Figur 5) und anschließend der bearbeitete untere Bund 10 durch mechanische Formung derart an den Kolbenrohling 1 angelegt wird, dass der Kühlkanal 7 entsteht (Figur 6). Anschließend erfolgt die Bearbeitung der seitlichen Flächen des Kolbenrohlings 1, wobei insbesondere wieder die Ausnehmungen für das Ringfeld 9 eingebracht werden.

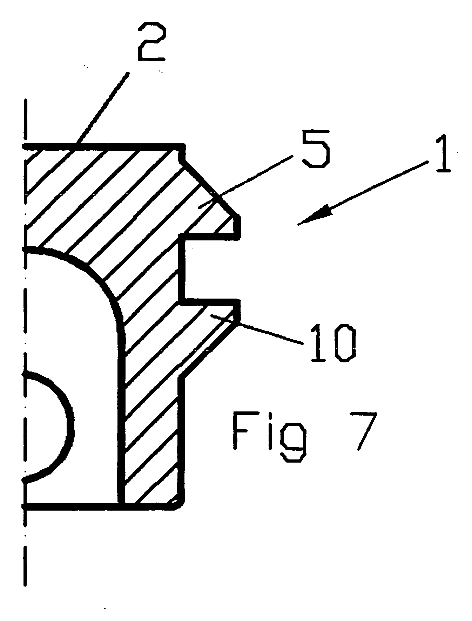

Figur 7 zeigt schließlich den erfindungsgemäßen Kolbenrohling 1, der sowohl einen oberen Bund 5 als auch beabstandet dazu einen unteren Bund 10 aufweist, die durch Schmieden hergestellt werden. In dem Bereich der einander zugewandten Flächen der beiden Bunde 5 und 10 wird in den Kolbenrohling 1 eine radial umlaufende Ausnehmung eingebracht und dann sowohl der obere Bund 5 als auch der untere Bund 10 in Richtung der Ausnehmung angelegt, so dass diese verschlossen und der Kühlkanal 7 gebildet wird. Je nach Bearbeitung der beiden Bunde 5, 10 ist es denkbar, dass diese nach dem Anlegen an den Kolbenrohling 1 an ihren Stoßkanten zur Anlage kommen oder auch sich überlappen können. Auch hier ist es wieder denkbar, die beiden aneinander liegenden Stoßflächen der Bunde 5, 10 unlösbar (z. B. durch Schweißen) miteinander zu verbinden.

### Bezugszeichenliste

- 1: Kolbenrohling
- 2: Kolbenboden
- 3: Kolbenschaft
- 4: Kolbennabe
- 5: (oberer) Bund
- 6: Ausnehmung
- 7: Kühlkanal
- 8: Anlagebereich
- 9: Ringfeld
- 10: (unterer) Bund

## Patentansprüche

1. Verfahren zur Herstellung eines Kühlkanalkolbens, der einen Kühlkanal (7) etwa im Bereich hinter einem Ringfeld (9) aufweist, wobei ein Kolbenrohling (1) zumindest teilweise in einem Schmiedeverfahren geformt wird, **dadurch gekennzeichnet, dass** der Kolbenrohling (1) sowohl einen oberen umlaufenden Bund (5) als auch beabstandet dazu einen unteren umlaufenden Bund (10) aufweist, die durch Schmieden hergestellt werden, wobei in dem Bereich der einander zugewandten Flächen der beiden Bunde (5) und (10) in den Kolbenrohling (1) eine radial umlaufende Ausnehmung (6) eingebracht und dann sowohl der obere Bund (5) als auch der untere Bund (10) in Richtung der Ausnehmung (6) umgeformt wird, so dass diese verschlossen und der Kühlkanal (7) gebildet wird.

2. Verfahren nach Anspruch 1, **dadurch gekennzeichnet, dass** die Umformung durch Schmieden erfolgt.

3. Verfahren nach Anspruch 1, **dadurch gekennzeichnet, dass** die Umformung durch Rundhämmern erfolgt.

4. Verfahren nach Anspruch 1, **dadurch gekennzeichnet, dass** die Umformung durch Treiben durch eine Hohlform erfolgt.

5. Verfahren nach Anspruch 1, **dadurch gekennzeichnet, dass** die Umformung durch Walzdrücken erfolgt.

6. Verfahren nach einem der vorhergehenden Ansprüche, **dadurch gekennzeichnet, dass** der eine Bund (5) mit dem weiteren Bund (10) unlösbar verbunden wird.

## Claims

1. Method of producing a cooling-passage piston which has a cooling passage (7) approximately in a region behind a ring zone (9), wherein a piston blank (1) is formed at least partly in a forging process, **characterized in that** the piston blank (1) has both a top circumferential collar (5) and a bottom circumferential collar (10) at a distance therefrom, which are produced by forging, wherein a radially circumferential recess (6) is incorporated in the piston blank (1) in the region of those surfaces of the two collars (5) and (10) which face one another, and then both the top collar (5) and the bottom collar (10) are worked in the direction of the recess (6), such that the latter is closed and the cooling passage (7) is formed.

2. Method according to Claim 1, **characterized in that** the working is effected by forging.

3. Method according to Claim 1, **characterized in that** the working is effected by swaging.

4. Method according to Claim 1, **characterized in that** the working is effected by driving through a hollow mould.

5. Method according to Claim 1, **characterized in that** the working is effected by flow forming.

6. Method according to one of the preceding claims, **characterized in that** the one collar is nondetachably connected to the further collar.

## Revendications

1. Procédé de fabrication d'un piston à canal de refroidissement qui présente un canal de refroidissement (7) approximativement dans la région située derrière un champ annulaire (9), dans lequel un piston brut (1) est façonné au moins en partie pendant un procédé de forgeage, **caractérisé en ce que** le piston brut (1) présente un collet périphérique supérieur (5) ainsi qu'un collet périphérique inférieur (10) espacé de celui-ci, qui sont fabriqués par forgeage, un évidement (6) radialement périphérique étant pratiqué dans la région des surfaces tournées l'une vers l'autre des deux collets (5) et (10) dans le piston brut (1), puis le collet supérieur (5) ainsi que le collet inférieur (10) étant façonnés dans la direction de l'évidement (6), de sorte qu'ils soient fermés et que le canal de refroidissement (7) soit formé.

2. Procédé selon la revendication 1, **caractérisé en ce que** le façonnage s'effectue par forgeage.

3. Procédé selon la revendication 1, **caractérisé en ce que** le façonnage s'effectue par retreinte.

4. Procédé selon la revendication 1, **caractérisé en ce que** le façonnage s'effectue par alimentation à travers un moule creux.

5. Procédé selon la revendication 1, **caractérisé en ce que** le façonnage s'effectue par laminage.

6. Procédé selon l'une quelconque des revendications précédentes, **caractérisé en ce que** l'un des collets (5) est connecté de manière permanente à l'autre collet (10).
